# EUROPÄISCHE PATENTSCHRIFT

(11) **EP 1 000 657 B1**
(45) Veröffentlichungstag und Bekanntmachung des Hinweises auf die Patenterteilung: **07.04.2004**
(21) Anmeldenummer: 99120948.7
(22) Anmeldetag: 09.11.1999
(51) Int. Cl.: B01F 7/04, B01F 15/00, B01F 7/10

(54) **Mischvorrichtung für hochviskose Produkte**
Mixer for highly viscous products
Mélangeur pour produits à viscosité élevée

(30) Priorität: 11.11.1998 DE 19852065
(43) Veröffentlichungstag der Anmeldung: 17.05.2000
(73) Patentinhaber: Bayer Aktiengesellschaft, 51368 Leverkusen (DE)
(72) Erfinder: Schuchhardt, Heinrich, 51373 Leverkusen (DE)

(56) Entgegenhaltungen:
- EP-A- 0 778 078
- CH-A- 277 294
- US-A- 3 195 868
- US-A- 5 334 358
- US-A- 5 505 536
- US-A- 5 658 075
- US-A- 5 669 710
- PATENT ABSTRACTS OF JAPAN vol. 013, no. 029 (C-562), 23. Januar 1989 (1989-01-23) & JP 63 232828 A (MITSUBISHI HEAVY IND LTD), 28. September 1988 (1988-09-28)
- PATENT ABSTRACTS OF JAPAN vol. 011, no. 080 (C-409), 11. März 1987 (1987-03-11) & JP 61 234917 A (MITSUBISHI HEAVY IND LTD), 20. Oktober 1986 (1986-10-20)

## Beschreibung

Die Erfindung betrifft eine Vorrichtung zur Behandlung von hochviskosen Substanzen, bestehend aus einem beheizbaren Behälter mit Mischguteinlaß auf der einen und Mischgutauslaß auf der anderen Seite und zwei oder mehreren gleichsinnig rotierenden Wellen, auf denen Mischelemente angebracht sind, wobei die Mischelemente aus zwei Mischerscheiben und zwei Lagen gekreuzt zueinander angeordneter Stege bestehen, die miteinander verbunden sind. An den Stirnseiten der Stege sind axial ausgedehnte Stifte angebracht. Diese reinigen die Zwischenräume zwischen den Stegen der Mischelemente der benachbarten Welle.

Bei der Herstellung von Polymeren (z.B. bei Polykondensationsreaktionen) werden unter anderem Verfahrensschritte, wie das Verdampfen von Lösungsmitteln und Monomeren auf viskose Medien angewandt.

Für diese Verfahrensschritte, die durch den Stoffaustausch zwischen einer flüssigen Phase und einer Gasphase bestimmt werden, ist das Produkt aus der Grenzfläche zwischen diesen beiden Phasen und dem Stoffübergangskoeffizienten geschwindigkeitsbestimmend.

Beim Stoffaustausch mit viskosen Flüssigkeiten wird der Stoffübergangskoeffizient im wesentlichen durch die Häufigkeit der Erneuerung der Oberflächen der Flüssigkeit kontrolliert.

Die Erneuerung von Oberflächen kann grundsätzlich nach zwei verschiedenen Mechanismen erfolgen:
- durch das Ausstreichen der Flüssigkeit an einer festen Oberfläche (z.B. beschrieben in der Patentschrift US 5,399,012) oder
- durch Fließenlassen von Flüssigkeiten in Form freier Flüssigkeitsfilme (wie in den Patentschriften US 5,779,986 oder US 5,599,507 genannt).

Die Erzeugung und Erneuerung der Flüssigkeitsoberflächen durch Herstellung freier Filme hat dabei die Vorteile, dass zum einen der apparative Aufwand gering bleibt und dass zum anderen wenig mechanische Energie in das Mischgut eingetragen werden muß.

Eine gute kinematische Selbstreinigung der Einbauten der Mischvorrichtung ist zudem erforderlich, um die Bildung von Ablagerungen an den Einbauten zu vermeiden, in denen im Falle der Verwendung des Mischers als Reaktor unerwünschte Nebenreaktionen durch eine lange Verweilzeit der Reaktanden begünstigt werden.

In der deutschen Patentanmeldung Aktenzeichen 19751730.7 ist eine Vorrichtung offenbart, die sowohl weitgehend kinematisch selbstreinigend ist als auch durch Filmbildung stetig erneuerte Flüssigkeitsoberflächen zum Stoffaustausch mit einer Gasphase erzeugt.

Sowohl bei Entgasungsvorgängen als auch bei Polymerisationen kommt es häufig innerhalb eines Mischers zu einem Anstieg der Viskosität um einen Faktor von mehr als 10. Ein Mischer der frei fallende Filme zur Erzeugung und Erneuerung der Flüssigkeitsoberflächen benutzt, kann nicht optimal arbeiten, wenn die Geometrie der Mischelemente über die Länge nicht variiert wird.

In dem Patent US 5,599,507 werden hierzu alternativ oder gleichzeitig über die Länge der Vorrichtung variiert:
- der Abstand zwischen den Mischelementen,
- der freie Querschnitt der Mischelemente,
- der Durchmesser der Öffnungen in den Mischelementen,
- die Größe der Öffnungen in den Überlaufwehren.

Aufgabe der vorliegenden Erfindung ist es, eine Vorrichtung zu schaffen, die durch Filmbildung Flüssigkeitsoberflächen zum Stoffaustausch mit einer Gasphase erzeugt und sowohl kinematisch selbstreinigend ist, als auch es gestattet Geometrieparameter über die Länge der Vorrichtung innerhalb eines großen Parameterbereiches zu verändern.

Erfindungsgemäß wird diese Aufgabe gelöst durch eine Mischvorrichtung, die Gegenstand der Erfindung ist, bestehend wenigstens aus einem beheizbaren Behälter mit Mischguteinlaß, Mischgutauslaß und zwei oder mehreren Wellen als rotierenden Einbauten im Behälter, verbunden mit einem Antriebsmittel für die gleichsinnige Rotation der Wellen, wobei auf den Wellen Mischelemente angebracht sind, dadurch gekennzeichnet, dass die Mischelemente aus zwei gekreuzt zu einander angeordneten scheibenförmigen Lagen aus je einer zentral angeordneten Mischerscheibe und Lagen von radial zur Mischerscheibe versetzten Stegen bestehen, wobei die scheibenförmigen Lagen aus Mischerscheiben und Stegen direkt in axialer Richtung miteinander verbunden sind oder indirekt über axial ausgedehnte Verbindungselemente axial miteinander verbunden sind und dass an den Stirnseiten der Mischelemente axial ausgedehnte Stifte angebracht sind, wobei die Stifte einer Welle während der Rotation der Wellen die Zwischenräume zwischen den Stegen der Mischelemente der jeweils anderen Welle reinigen. Dabei sind die zwei Lagen Stege so gegeneinander um die Wellenachse verdreht angeordnet, dass in einer Projektion längs der Welle die Projektionen der Stege einander kreuzen.

Diese erfindungsgemäße Anordnung gestattet eine komplette kinematische Abreinigung der von Mischgut berührten Teile der Einbauten und ggf. des Gehäuses der Vorrichtung:

Die Stege werden an der relativ zum Mischelement nach außen gewandten Stirnseite von Stegen der Mischelemente der im Eingriff befindlichen Welle gereinigt. Die nach innen gewandten Stirnseiten werden durch die Stifte der im Eingriff befindlichen Welle gereinigt.

Die Wellen werden durch Stege und Stifte gereinigt.

Die Stifte werden durch die Stege gereinigt. Das Gehäuse wird an seinem Umfang durch Stifte und Stege gereinigt.

Wenn an den in axialer Richtung gesehen Enden der Wellen zusätzliche Endscheiben vorgesehen werden, so können diese die Gehäusestimfläche reinigen.

Eine bevorzugte Vorrichtung ist dadurch gekennzeichnet, dass die Stifte an den Stirnseiten der Stege angebracht sind.

In einer bevorzugten Ausführung sind die einander kreuzenden Lagen von Stegen und die Mischerscheiben eines Mischelementes nicht direkt miteinander verbunden, sondern über eine Lage von axial ausgedehnten Verbindungselementen.

Eine besondere Ausführung der Vorrichtung ist so ausgeführt, dass die Wellen mit Mischelementen in wenigstens zwei Bereiche unterteilt sind, in denen die Mischelemente eine unterschiedliche Zahl von Stegen aufweisen.

Besonders bevorzugt ist eine Ausführung der Vorrichtung bei der die Zahl der Stege eines jeden Mischelementes im Bereich des Mischguteinlaß höher ist als im Bereich des Mischgutauslaß.

Hierbei ändert sich z.B. über die Länge der Vorrichtung die Anzahl der Stege je Lage, so dass in Bereichen mit hoher Viskosität des Mischgut abhängig von dem in der Vorrichtung durchgeführten Prozeß, insbesondere zum Auslaß hin, die Anzahl der Stege klein wird, wodurch der Mischprozeß vergleichmäßigt wird. Aufgrund der höheren Zähigkeit des Mischgutes sind hier die Produktfilme auf den Oberflächen dicker, so dass gröbere Elemente für Ausdampfprozesse erforderlich sind.

Eine bevorzugte Variante der Vorrichtung ist dadurch gekennzeichnet, dass auf den Wellen der Übergang zwischen den Bereichen mit Mischelementen mit einer unterschiedlichen Zahl von Stegen durch Mischelemente gebildet wird, die zwei Lagen mit einer unterschiedlichen Zahl von sich kreuzenden Stegen aufweisen.

Bei einer andere Variante der Mischvorrichtung sind die Wellen mit Mischelementen in wenigstens zwei Bereiche unterteilt, in denen die Mischelemente in Richtung der Wellenachse gesehen unterschiedlich breite Zwischenräume zwischen den Stegen aufweisen.

Besonders bevorzugt ist eine Vorrichtung, bei der die Breite der Zwischenräume zwischen den Stegen eines jeden Mischelementes im Bereich des Mischguteinlaß kleiner ist als im Bereich des Mischgutauslaß.

Bei dieser Ausführung ändert sich über die Länge der Vorrichtung die Breite der Lücken zwischen den Stegen einer Lage, so dass in Bereichen mit hoher Viskosität des Mischgutes im durchgeführten Prozeß die Lücken groß werden. Flüssigkeitsfilme hoher Viskosität sind über größere Fallhöhen stabil. Aufgrund ihrer Zähigkeit dünnen sie über die Fallhöhe gesehen langsamer aus als Flüssigkeitsfilme niedrigerer Viskosität.

Eine bevorzugte Variante der genannten Ausführung der Vorrichtung ist so ausgeführt, dass auf den Wellen der Übergang zwischen den Bereichen mit Mischelementen mit einer unterschiedlichen Breite der Zwischenräume zwischen den Stegen durch Mischelemente gebildet wird, die zwei Lagen von sich kreuzenden Stegen mit unterschiedlichen Zwischenräumen aufweisen.

Besonders bevorzugt ist auch eine Ausführung der Vorrichtung, bei der das Antriebsmittel für die gleichschnelle Rotation benachbarter Wellen ausgebildet ist.

Eine weitere bevorzugte Variante der Mischvorrichtung ist dadurch gekennzeichnet, dass die Ausdehnung der Mischelemente in Richtung entlang der Wellenachse gesehen im Bereich des Mischguteinlaß kleiner ist als im Bereich des Mischgutauslaß.

In dieser Ausführung ändert sich über die Länge der Vorrichtung die axiale Ausdehnung der Mischelemente, so dass in Bereichen mit hoher Viskosität z.B. im Bereich des Auslasses, die axiale Ausdehnung der einzelnen Mischelemente groß wird. Bei hoher Viskosität des Mischgutes sind die Produktfilme dicker, so dass mehr axialer Raum erforderlich ist.

In einer besonders bevorzugten Ausführung der Vorrichtung ist die unterschiedliche axiale Ausdehnung der Mischelemente durch in axialer Richtung gesehen unterschiedlich ausgedehnte Verbindungselemente bewirkt.

Um eine größere Heizfläche zu erhalten, können außer dem Gehäuse auch die Wellen oder auch zusätzlich die Stege, Stifte und Verbindungselemente beheizt werden.

Die Erfindung wird nachstehend anhand der Figuren beispielhaft näher erläutert. Die Erfindung wird dadurch nicht im einzelnen eingeschränkt.
- Figur 1a: zeigt in einer schematischen Aufsicht den Aufbau einer erfindungsgemäßen Vorrichtung. Das Gehäuse ist nur schematisch und geöffnet dargestellt.
- Figur 1b: zeigt den Aufbau der Vorrichtung nach Fig. 1a in einer Seitenansicht
- Figur 1c: zeigt den Aufbau der Vorrichtung nach Fig. 1a in einem Schnitt entsprechend der Linie A-A.
- Figur 2: zeigt in einer perspektivischen Darstellung die Wellen und Mischelemente der Vorrichtung aus Figur 1.
- Figur 3: zeigt in den Ansichten 3a und 3b den Aufbau eines einzelnen Mischelementes der Vorrichtung nach Figur 1
- Figur 4: zeigt einen Radialschnitt durch die Verbindungselemente 5' und die im Eingriff befindlichen Stifte 6, 7 aus Figur 1.
- Figur 5: zeigt einen Radialschnitt durch die Lage von Stegen 4' und die im Eingriff befindlichen Stifte 6 aus Figur 1.
- Figur 6: zeigt einen Radialschnitt durch die Endscheiben 8, 9' aus Figur 1.
- Figuren 7a,b: zeigen ein Mischelement mit dem Übergang von Steglagen mit 8 Stiften auf dem Radius auf Steglagen mit 4 Stiften auf dem Umfang.
- Figuren 8a-d: zeigen mehrere Mischelemente, die sich durch den Abstand zwischen den Stegen unterscheiden.
- Figuren 9a-d: zeigen mehrere Mischelemente, die sich durch die axiale Ausdehnung der Verbindungselemente unterscheiden.
- Figuren 10a,b: zeigen zwei Mischelemente, die sich durch den Querschnitt der Stifte unterscheiden.

### Beispiele

### Beispiel 1

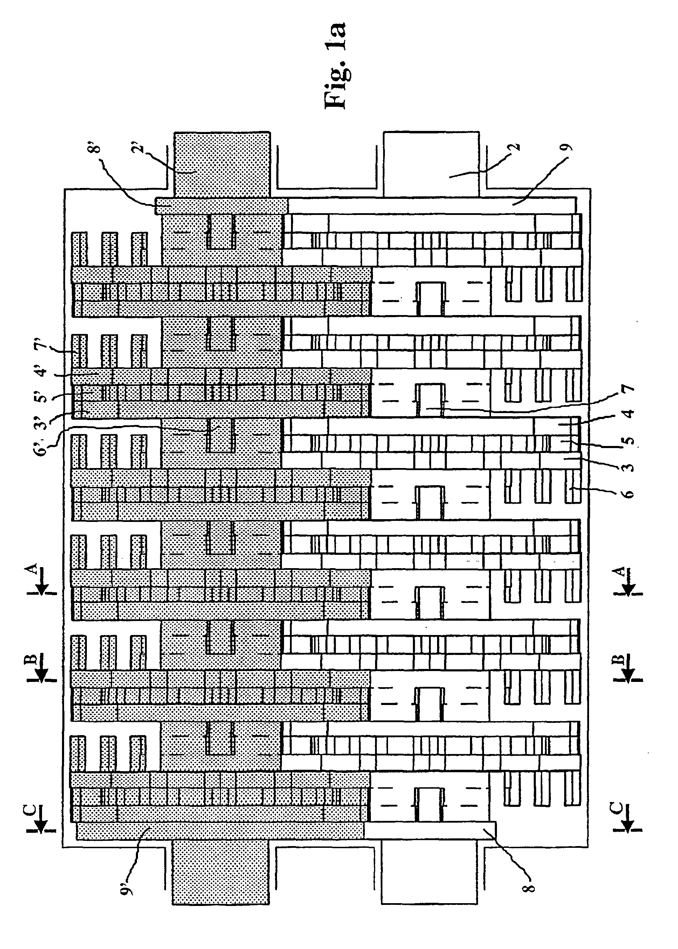

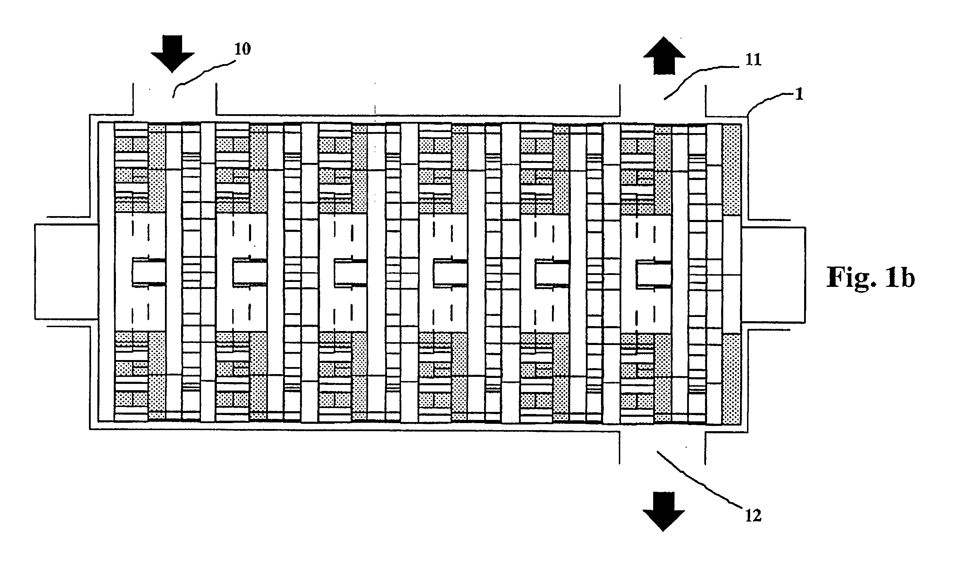

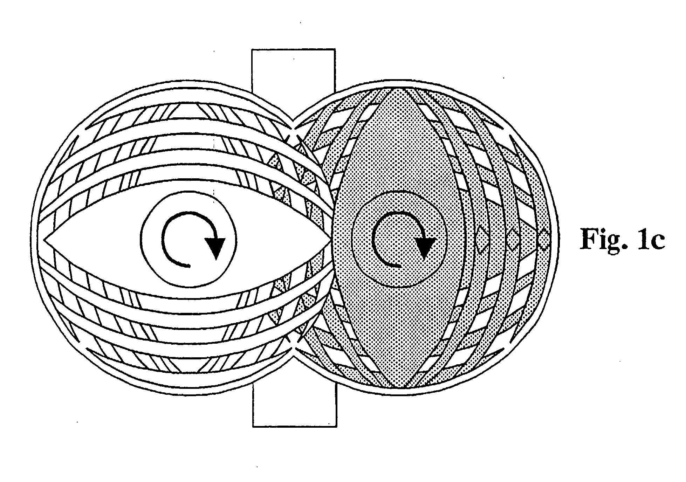

In Figur 1 wird der Gesamtaufbau der Vorrichtung gezeigt. Fig. 1a zeigt die Draufsicht, Fig. 1b die Seitenansicht, Fig. 1c die Vorderansicht.

Das nur schematisch angedeutete beheizte Gehäuse 1 weist einen Produkteinlaß 10, einen Produktauslaß 12 und einen Brüdenstutzen 11 auf.

In dem Gehäuse 1 sind zwei parallele, gleichsinnig, gleichschnell rotierende Wellen 2, 2' angeordnet. Auf diesen befinden sich axial versetzt Mischelemente13, 13'. Diese bestehen aus jeweils zwei Mischerscheiben 15 und zwei Lagen gekreuzt zueinander angeordneter sichelförmiger Stege 3, 4 bzw. 3', 4' die durch axial ausgedehnte Verbindungselemente 5 bzw. 5' miteinander verbunden sind. Auf den Stirnseiten befinden sich auf den Stegen 3, 4 bzw. 3', 4' mittig angeordnete Stifte 6, 7 bzw. 6', 7', die während der Rotation der Wellen 2, 2' die Lücken zwischen den Stegen 3', 4' bzw. 4, 3 und zwischen den Verbindungselemente 5' bzw. 5 der Mischelemente der anderen Welle reinigen.

Über die ganze Länge des Mischers beträgt die Anzahl der Stifte auf einem Durchmesser 6. Alle Mischelemente sind in dieser Bauform gleich aufgebaut.

In axialer Richtung an den Enden sind Endscheiben 8, 9 bzw. 8', 9' angebracht, die die Gehäusestimseiten reinigen. Die Endscheiben 9 und 9' tragen ebenfalls Stifte. Diese Stifte reinigen die endständigen Mischelemente.

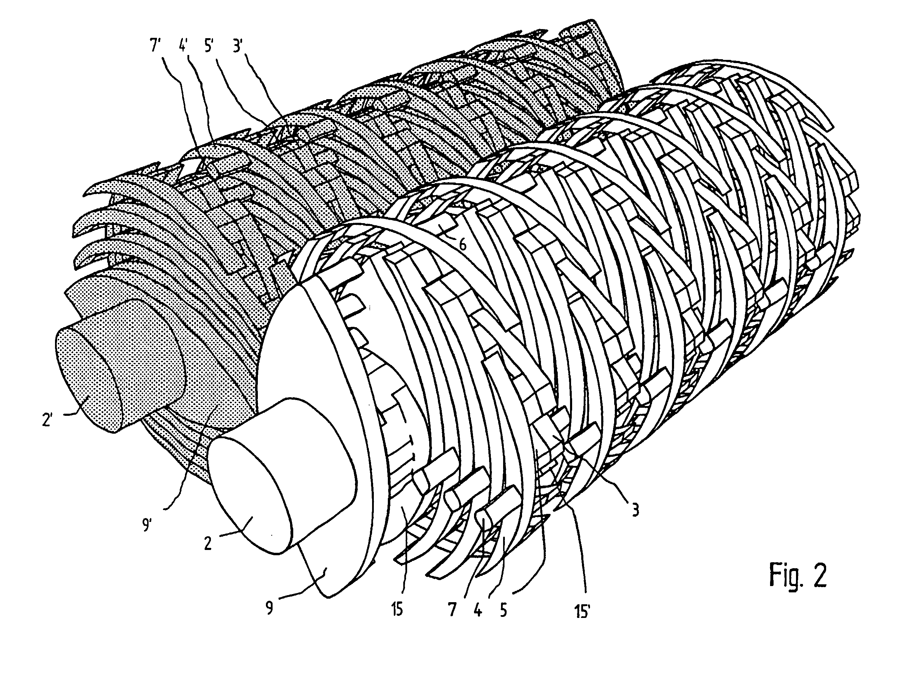

In Figur 2 sind die Rotoren perspektivisch dargestellt.

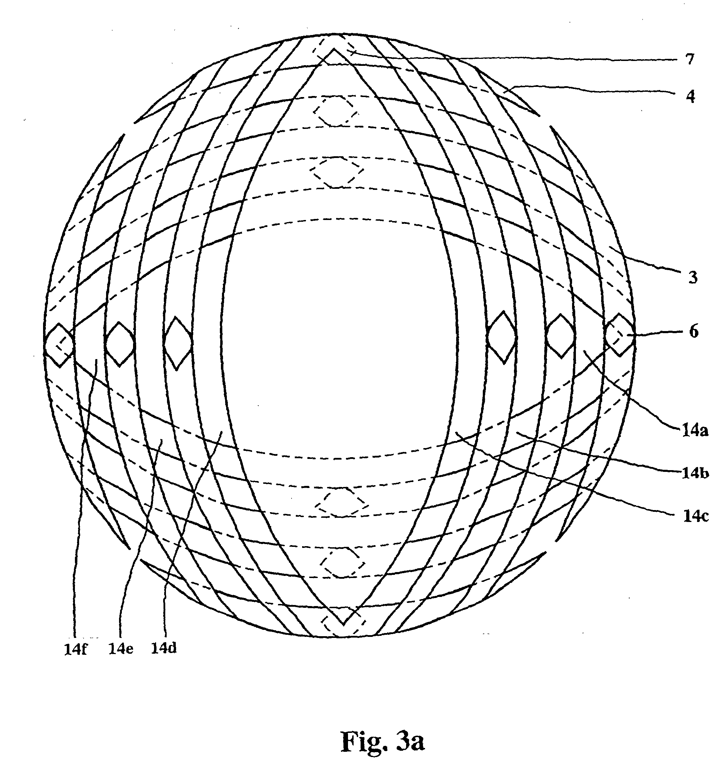

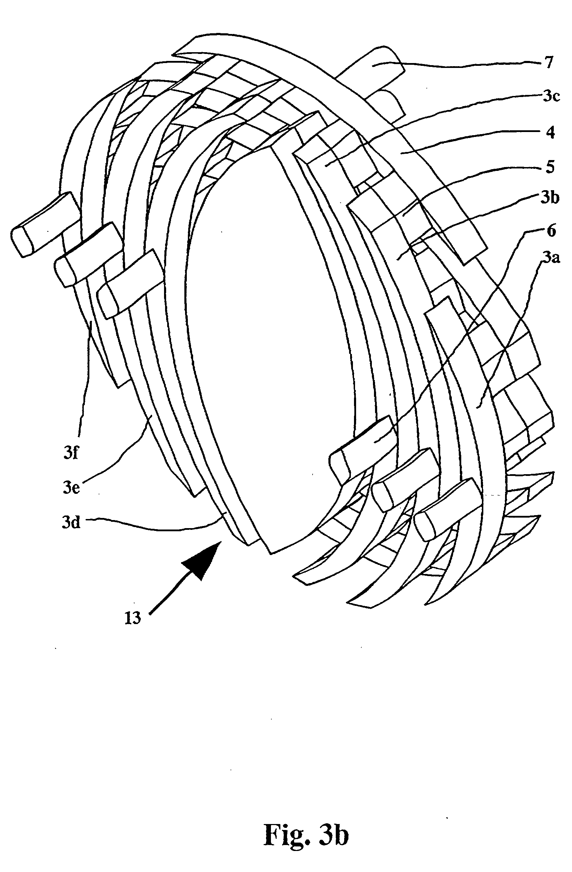

Ein einzelnes Mischelement zeigt Figur 3a in Vorderansicht und Figur 3b in einer perspektivischen Darstellung.

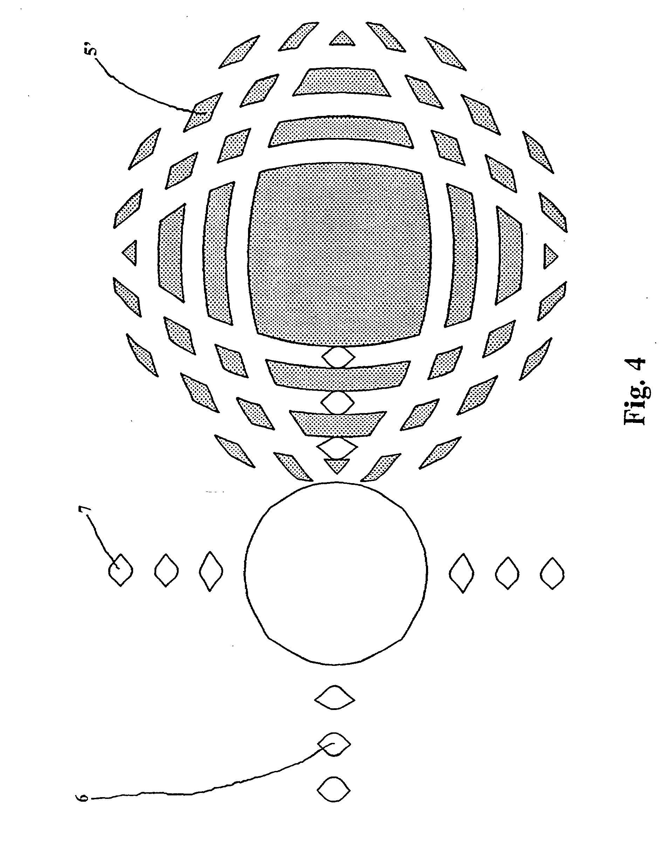

Figur 4 zeigt einen Schnitt durch die Verbindungselemente 5' und die im Eingriff befindlichen Stifte 6, 7.

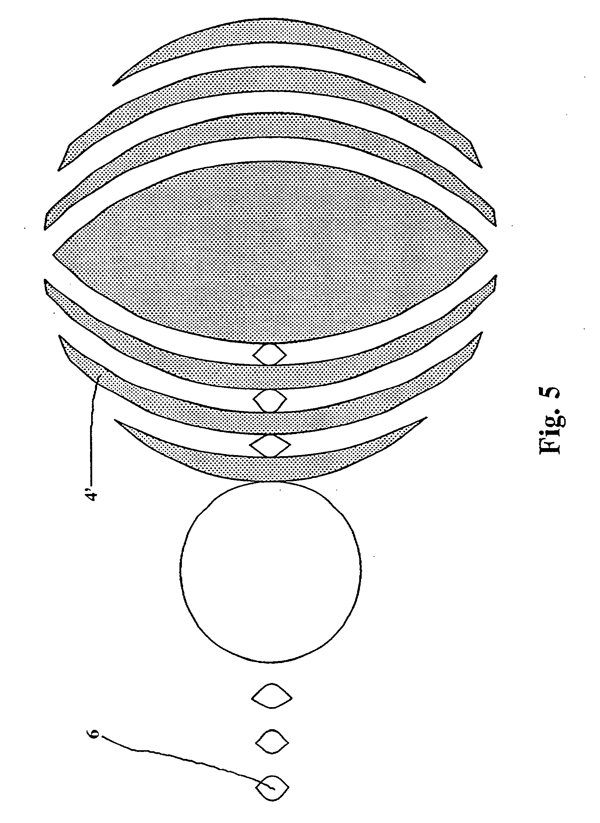

Figur 5 zeigt einen Radialschnitt durch die Lage von Stegen 4' und die im Eingriff befindlichen Stifte 6.

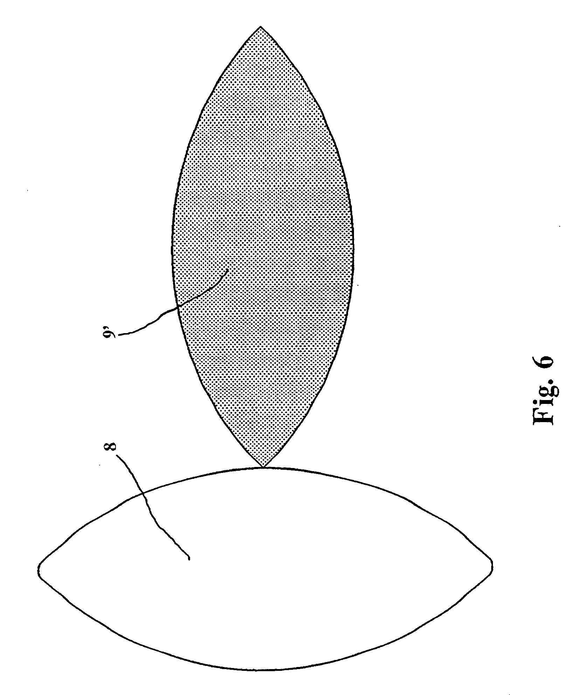

Figur 6 zeigt einen Radialschnitt durch die Endscheiben 8, 9'.

### Beispiel 2

In einer anderen Ausführung der Vorrichtung wird über die Länge der Vorrichtung die Anzahl der Stege je Lage variiert, so dass in Bereichen mit hohen Viskositäten im durchgeführten Prozeß, i.a. zum Austritt hin, die Anzahl der Stege klein wird.

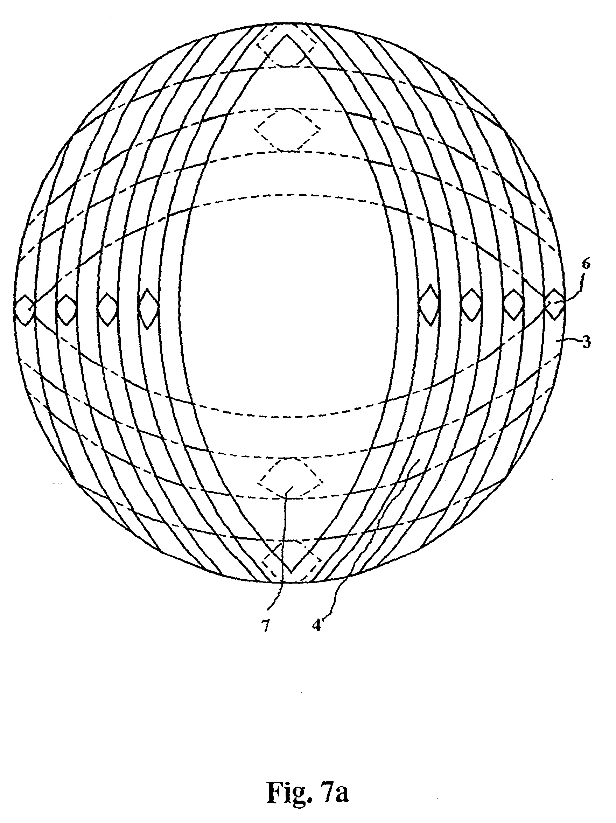

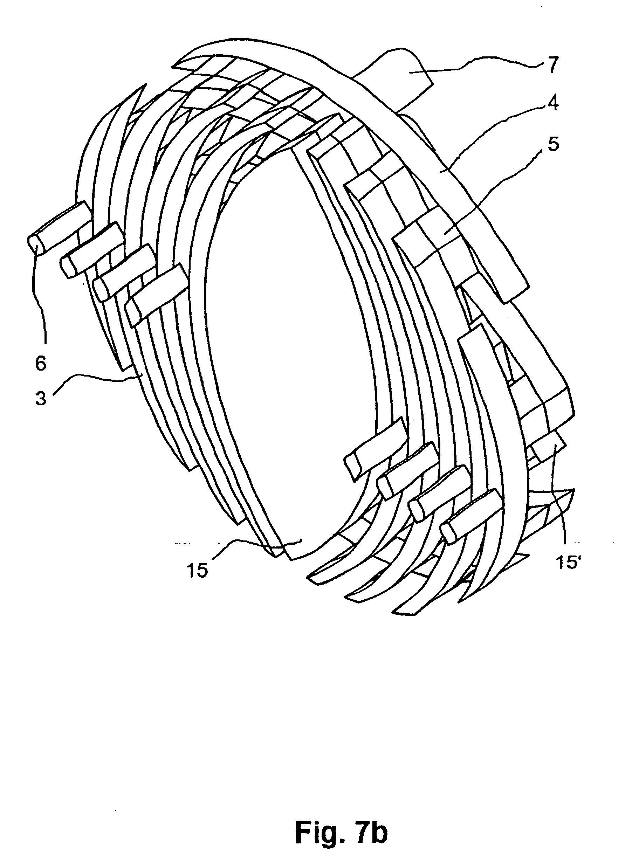

Figur 7 zeigt eine Übergangsscheibe von einer Zone mit 8 Stiften auf dem Durchmesser zu einer Zone mit 4 Stiften auf dem Durchmesser in Vorderansicht (Fig. 7a) und in einer perspektivischen Ansicht (Fig. 7b).

### Beispiel 3

In einer weiteren Ausführung der Vorrichtung ist der Abstand zwischen den Stegen der Mischelemente so geändert, dass an Orten mit hoher Viskosität des Mischgutes, i.a. zum Mischgutauslaß hin, der Abstand zwischen den Stegen groß wird.

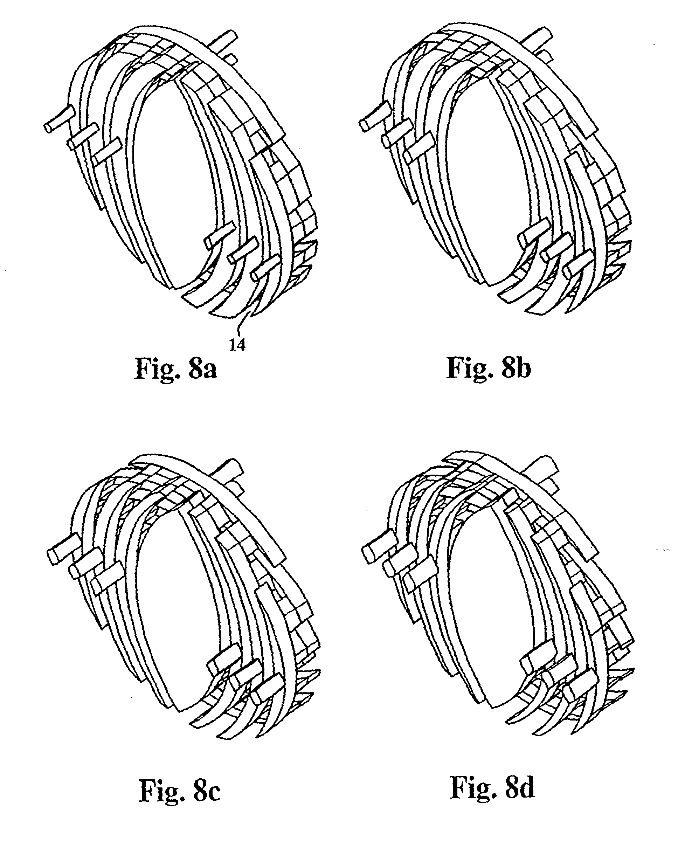

Die Figuren 8a bis 8d zeigen in dieser Reihenfolge Mischelemente mit steigendem Abstand zwischen den Lücken, die in dieser Ausführung zum Einsatz kommen.

### Beispiel 4

In dieser Bauform der Vorrichtung ist die axiale Ausdehnung der Mischelemente so geändert, dass an Orten mit hoher Viskosität, i.a. zum Mischgutauslaß hin, die axiale Ausdehnung groß wird. Besonders bevorzugt ist eine Ausführung, bei der die Länge der Verbindungselemente zwischen den Steglagen variiert wird.

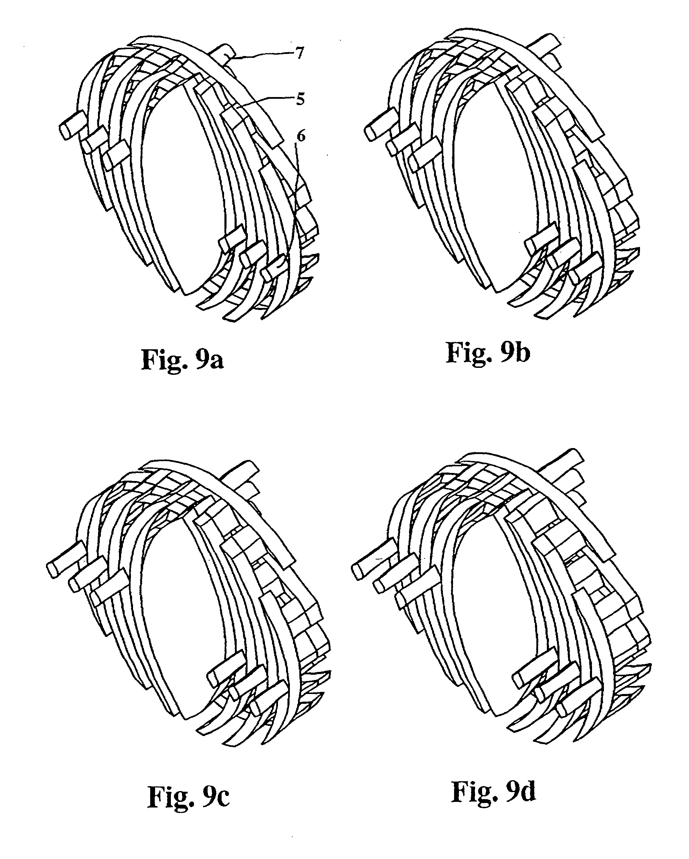

Die Figuren 9a bis 9d zeigen in dieser Reihenfolge Mischelemente mit steigender Länge der Verbindungselemente.

### Beispiel 5

Die Stifte, die die Lücken zwischen den Stegen reinigen, können geometrisch verschieden gestaltet werden.

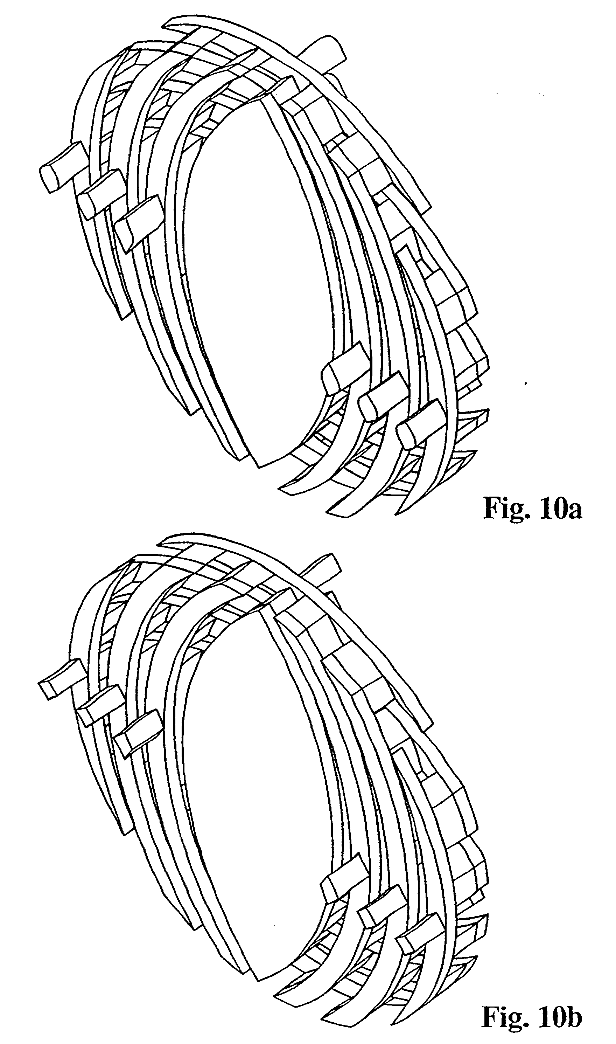

In der Vorrichtung nach Figur 10a werden die Stege durch zylindrische Flächen der Stifte gereinigt.

In der Vorrichtung nach Figur 10b werden die Stege durch Kanten der Stifte gereinigt. Im zweiten Fall sind die Enden der Stege breiter, die Lücken zwischen den Stegen an ihren Enden schmaler.

## Patentansprüche

1. Mischvorrichtung bestehend wenigstens aus einem beheizbaren Behälter (1) mit Mischguteinlaß (10), Mischgutauslaß (12) und zwei oder mehreren Wellen (2, 2') als rotierenden Einbauten im Behälter (1), verbunden mit einem Antriebsmittel für die gleichsinnige Rotation der Wellen (2, 2'), wobei auf den Wellen (2, 2') Mischelemente (13, 13') angebracht sind, **dadurch gekennzeichnet, dass** die Mischelemente (13, 13') aus zwei gekreuzt zu einander angeordneten scheibenförmigen Lagen aus je einer zentral angeordneten Mischerscheibe (15, 15') und Lagen von radial zur Mischerscheibe (15, 15') versetzten Stegen (3, 4) bzw. (3', 4') bestehen, wobei die scheibenförmigen Lagen aus Mischerscheiben (15, 15') und Stegen (3, 4 3', 4') direkt in axialer Richtung miteinander verbunden sind oder indirekt über axial ausgedehnte Verbindungselemente (5, 5') axial miteinander verbunden sind und dass an den Stirnseiten der Mischelemente (13) axial ausgedehnte Stifte (6, 7, 6', 7') angebracht sind, wobei die Stifte (6, 7) bzw. (6', 7') einer Welle (2) bzw. (2') während der Rotation der Wellen (2, 2') die Zwischenräume zwischen den Stegen (3', 4') bzw. (3, 4) der Mischelemente (13') bzw. (13) der jeweils anderen Welle (2') bzw. (2) reinigen.

2. Vorrichtung nach Anspruch 1, **dadurch gekennzeichnet, dass** die Stifte (6, 7) bzw. (6', 7') an den Stirnseiten der Stege (3', 4') bzw. (3, 4) angebracht sind.

3. Vorrichtung nach Anspruch 1 oder 2, **dadurch gekennzeichnet, dass** die einander kreuzenden Lagen von Stegen (3, 4, 3', 4') eines Mischelementes (13, 13') über eine Lage von axial ausgedehnten Verbindungselementen (5, 5') miteinander verbunden sind.

4. Vorrichtung nach einem der Ansprüche 1 bis 3, **dadurch gekennzeichnet, dass** die Wellen (2, 2') mit Mischelementen (13, 13') in wenigstens zwei Bereiche unterteilt sind, in denen die Mischelemente (13, 13') eine unterschiedliche Zahl von Stegen (3', 4', 3, 4) aufweisen.

5. Vorrichtung nach Anspruch 4, **dadurch gekennzeichnet, dass** die Zahl der Stege (3', 4', 3, 4) eines jeden Mischelementes (13, 13') im Bereich des Mischguteinlaß (10) höher ist als im Bereich des Mischgutauslaß (12).

6. Vorrichtung nach Anspruch 4 oder 5, **dadurch gekennzeichnet, dass** auf den Wellen (2, 2') der Übergang zwischen den Bereichen mit Mischelementen (13, 13') mit einer unterschiedlichen Zahl von Stegen (3', 4', 3, 4) durch Mischelemente gebildet wird, die zwei Lagen mit einer unterschiedlichen Zahl von gekreuzt zueinander angeordneten Stegen aufweisen.

7. Vorrichtung nach einem der Ansprüche 1 bis 6, **dadurch gekennzeichnet, dass** die Wellen (2, 2') mit Mischelementen (13, 13') in wenigstens zwei Bereiche unterteilt sind, in denen die Mischelemente (13, 13') in Richtung der Wellenachse gesehen unterschiedlich breite Zwischenräume (14a, ...14f) zwischen den Stegen (3', 4', 3, 4) aufweisen.

8. Vorrichtung nach Anspruch 7, **dadurch gekennzeichnet, dass** die Breite der Zwischenräume (14a, ...14f) zwischen den Stegen (3', 4', 3, 4) eines jeden Mischelementes (13, 13') im Bereich des Mischguteinlaß (10) kleiner ist als im Bereich des Mischgutauslaß (12).

9. Vorrichtung nach Anspruch 7 oder 8, **dadurch gekennzeichnet, dass** auf den Wellen (2, 2') der Übergang zwischen den Bereichen mit Mischelementen (13, 13') mit einer unterschiedlichen Breite der Zwischenräume (14a, ...14f) zwischen den Stegen (3', 4', 3, 4) durch Mischelemente gebildet wird, die zwei Lagen von gekreuzt zueinander angeordneten Stegen mit unterschiedlichen Zwischenräumen (14a, ...14f) aufweisen.

10. Vorrichtung nach einem der Ansprüche 1 bis 9, **dadurch gekennzeichnet, dass** das Antriebsmittel für die gleichschnelle Rotation benachbarter Wellen (2, 2') ausgebildet ist.

11. Vorrichtung nach einem der Ansprüche 1 bis 10, **dadurch gekennzeichnet, dass** die Ausdehnung der Mischelemente (13, 13') in Richtung entlang der Wellenachse gesehen im Bereich des Mischguteinlaß (10) kleiner ist als im Bereich des Mischgutauslaß (12).

12. Vorrichtung nach Anspruch 11, **dadurch gekennzeichnet, dass** die unterschiedliche axiale Ausdehnung der Mischelemente (13, 13') durch in axialer Richtung gesehen unterschiedlich ausgedehnte Verbindungselemente (5, 5') bewirkt ist.

## Claims

1. Mixing apparatus composed at least of a heatable vessel (1) with inlet (10) for the materials of the mix, outlet (12) for the materials of the mix and two or more shafts (2 and 2') as rotating internals in the vessel (1), connected to a drive for corotation of the shafts (2 and 2'), where there are mixer elements (13 and 13') attached to the shafts (2 and 2'), **characterized in that** the mixer elements (13 and 13') are composed of two intersecting plate-like layers composed respectively of a centrally arranged mixer plate (15, 15') and of layers of bars (3,4) and, respectively, (3', 4') at different radial positions with respect to the mixer plate (15, 15'), the plate-like layers composed of mixer plates (15, 15') and of bars (3,4, 3', 4') having direct connection to one another in the axial direction, or having indirect connection to one another axially by way of connector elements (5, 5') running axially, and **in that** there are pins (6 and 7, and 6' and 7') attached to the face sides of the mixer elements (13) and running axially, where the pins (6 and 7) or, respectively, (6' and 7') of a shaft (2) or, respectively, (2'), during the rotation of the shafts (2 and 2'), clean the interstices between the bars (3' and 4') or, respectively, (3 and 4) of the mixer elements (13') or, respectively, (13) of, in each case, the other shaft (2') or, respectively, (2).

2. Apparatus according to Claim 1, **characterized in that** the pins (6 and 7) or, respectively, (6' and 7') have been attached to the face sides of the bars (3' and 4') or, respectively, (3 and 4).

3. Apparatus according to Claim 1 or 2, **characterized in that** the connection between intersecting layers of bars (3 and 4, and 3' and 4') of a mixer element (13 and 13') is via a layer of connector elements (5 and 5') running axially.

4. Apparatus according to any of Claims 1 to 3, **characterized in that** the shafts (2 and 2') with mixer elements (13 and 13') have been subdivided into at least two areas in which the mixer elements (13 and 13') have a different number of bars (3' and 4', and 3 and 4).

5. Apparatus according to Claim 4, **characterized in that** the number of bars (3' and 4', and 3 and 4) of each mixer element (13 and 13') is higher in the area of the inlet (10) for the materials of the mix than in the area of the outlet (12) for the materials of the mix.

6. Apparatus according to Claim 4 or 5, **characterized in that**, on the shafts (2 and 2'), the transition between the areas with mixer elements (13 and 13') with a different number of bars (3' and 4', and 3 and 4) is formed by mixer elements which have two layers with a different number of intersecting bars.

7. Apparatus according to any of Claims 1 to 6, **characterized in that** the shafts (2 and 2') with mixer elements (13 and 13') have been subdivided into at least two areas in which, seen in the direction of the shaft axis, the mixer elements (13 and 13') haveinterstices (14a, ...14f) of different widths between the bars (3' and 4', and 3 and 4).

8. Apparatus according to Claim 7, **characterized in that** the width of the interstices (14a, ...14f) between the bars (3' and 4', and 3 and 4) of each mixer element (13 and 13') in the area of the inlet (10) for the materials of the mix is smaller than in the area of the outlet (12) for the materials of the mix.

9. Apparatus according to Claim 7 or 8, **characterized in that**, on the shafts (2 and 2'), the transition between the areas with mixer elements (13 and 13') with a different width of the interstices (14a, ...14f) between the bars (3' and 4', and 3 and 4) is formed by mixer elements which have two layers of intersecting bars with different interstices (14a, ...14f).

10. Apparatus according to any of Claims 1 to 9, **characterized in that** the drive is constructed for equal-speed rotation of adjacent shafts (2 and 2').

11. Apparatus according to any of Claims 1 to 10, **characterized in that** the dimension of the mixer elements (13 and 13'), seen in the direction along the shaft axis, is smaller in the area of the inlet (10) for the materials of the mix than in the area of the outlet (12) for the materials of the mix.

12. Apparatus according to Claim 11, **characterized in that** the different axial dimensions of the mixer elements (13 and 13') are brought about by, seen in the axial direction, different dimensions of connector elements (5 and 5').

## Revendications

1. Mélangeur formé par au moins une cage (1) apte à être chauffée, comprenant une admission pour mélange (10), une sortie pour mélange (12) et deux ou plusieurs arbres (2, 2') sous forme d'éléments rotatifs intégrés dans la cage (1) et reliés à un moyen d'entraînement destiné à entraîner les arbres (2, 2') dans le même sens de rotation, des éléments de brassage (13, 13') étant agencés sur les arbres (2, 2'), **caractérisé en ce que** les éléments de brassage (13, 13') sont formés par deux niveaux en forme de plateaux disposés en croix l'un par rapport à l'autre et formés chacun par un plateau mélangeur (15, 15') central et des niveaux de traverses (3, 4) et (3', 4') décalées radialement par rapport au plateau mélangeur (15, 15'), les niveaux en forme de plateaux formés par des plateaux mélangeurs (15, 15') et des traverses (3, 4, 3', 4') étant reliés l'un à l'autre directement dans le sens axial ou étant reliés axialement l'un à l'autre indirectement par l'intermédiaire d'éléments de liaison (5, 5') orientés axialement, et **en ce que** des broches (6, 7, 6', 7') orientées dans le sens axial sont agencées sur les faces frontales des éléments de brassage (13), les broches (6, 7) ou (6', 7') d'un arbre (2) ou (2') nettoyant pendant la rotation des arbres (2, 2') les intervalles entre les traverses (3', 4') ou (3, 4) des éléments de brassage (13') ou (13) de respectivement l'autre arbre (2') ou (2).

2. Dispositif selon la revendication 1, **caractérisé en ce que** les broches (6, 7) et (6', 7') sont agencées sur les faces frontales des traverses (3', 4') et (3, 4).

3. Dispositif selon la revendication 1 ou 2, **caractérisé en ce que** les niveaux de traverses (3, 4, 3', 4') s'entrecroisant d'un élément de brassage (13, 13') sont reliés l'un à l'autre par l'intermédiaire d'un niveau d'éléments de liaison (5, 5') orientés. dans le sens axial.

4. Dispositif selon l'une quelconque des revendications 1 à 3, **caractérisé en ce que** les arbres (2, 2') avec des éléments de brassage (13, 13') sont subdivisés en au moins deux zones, dans lesquelles les éléments de brassage (13, 13') sont munis d'un nombre différent de traverses (3, 4, 3', 4').

5. Dispositif selon la revendication 4, **caractérisé en ce que** le nombre de traverses (3, 4, 3', 4') de chaque élément de brassage (13, 13') est plus grand dans la zone de l'admission du mélange (10) que dans la zone de sortie du mélange (12).

6. Dispositif selon la revendication 4 ou 5, **caractérisé en ce que**, sur les arbres (2, 2'), la zone de transition entre les zones munies d'éléments de brassage (13, 13') avec un nombre différent de traverses (3, 4, 3', 4') est formée par des éléments de brassage qui sont munis de deux niveaux avec un nombre différent de traverses s'entrecroisant.

7. Dispositif selon l'une quelconque des revendications 1 à 6, **caractérisé en ce que** les arbres (2, 2') avec des éléments de brassage (13, 13') sont subdivisés en au moins deux zones, dans lesquelles les éléments de brassage (13, 13') comportent entre les traverses (3, 4, 3', 4') des intervalles (14a, ... 14f) de largeur différente par référence à la direction de l'axe des arbres.

8. Dispositif selon la revendication 7, **caractérisé en ce que** la largeur des intervalles (14a, ... 14f) entre les traverses (3, 4, 3', 4') de chacun des éléments de brassage (13, 13') dans la zone d'admission du mélange (10) est inférieure à celle dans la zone de sortie du mélange (12).

9. Dispositif selon la revendication 7 ou 8, **caractérisé en ce que**, sur les arbres (2, 2'), la zone de transition entre les zones munies d'éléments de brassage (13, 13') avec des intervalles (14a, ... 14f) de largeur différente entre les traverses (3, 4, 3', 4') est formée par des éléments de brassage qui sont munis de deux niveaux de traverses s'entrecroisant et avec des intervalles différents (14a, ... 14f).

10. Dispositif selon l'une quelconque des revendications 1 à 9, **caractérisé en ce que** le moyen d'entraînement est conçu pour la rotation à même vitesse des arbres (2, 2') voisins.

11. Dispositif selon l'une quelconque des revendications 1 à 10, **caractérisé en ce que**, dans la zone de l'admission du mélange (10), la dimension des éléments de brassage (13, 13'), par référence à une direction le long de l'axe des arbres, est inférieure à celle dans la zone de la sortie du mélange (12).

12. Dispositif selon la revendication 11, **caractérisé en ce que** la différence de dimension axiale des éléments de brassage (13, 13') est obtenue par des éléments de liaison (5, 5') qui ont des dimensions différentes dans la direction axiale.
